# EUROPÄISCHE PATENTSCHRIFT

(11) **EP 3 331 370 B1**
(45) Veröffentlichungstag und Bekanntmachung des Hinweises auf die Patenterteilung: **15.05.2019**
(21) Anmeldenummer: 16808922.5
(22) Anmeldetag: 10.11.2016
(51) Int. Cl.: A23G 1/00, A23G 1/21, A23G 1/22, A23G 3/34

(54) **VORRICHTUNG ZUM HERSTELLEN VON VERZEHRGÜTERN**
DEVICE FOR PRODUCING CONSUMABLE PRODUCTS
DISPOSITIF DESTINÉ À LA FABRICATION DE PRODUITS CONSOMMABLES

(30) Priorität: 11.11.2015 DE 102015119438
(43) Veröffentlichungstag der Anmeldung: 13.06.2018
(73) Patentinhaber: KMB Produktions AG, 8552 Felben (CH)
(72) Erfinder: KNOBEL, Guido, 8280 Kreuzlingen (CH)
(74) Vertreter: Patentanwälte und Rechtsanwalt Weiß, Arat & Partner mbB
(86) Internationale Anmeldenummer: PCT/EP2016/077292
(87) Internationale Veröffentlichungsnummer: WO 2017/081168

(56) Entgegenhaltungen:
- WO-A1-98/52425
- WO-A1-2015/101964
- DE-A1- 1 951 338
- DE-B- 1 151 722
- US-A- 3 529 553
- US-A- 4 027 047

## Beschreibung

Die Erfindung betrifft eine Vorrichtung zum Herstellen von Verzehrgütern mit einer äusseren Schale aus einer fliessfähigen Masse, welche in eine Form eingefüllt wird, wobei in die Form ein temperierter Stempel eintaucht und die Masse fliesspresst.

### Stand der Technik

Derartige Vorrichtungen zum Herstellen von Verzehrgütern sind in vielfältiger Form und Ausführung bekannt.

Bei einer Reihe von Verzehrgütern ist es notwendig, eine äussere Schale aus einer fliessfähigen Masse herzustellen, wobei diese fliessfähige Masse in einen Form eingepresst wird und dort durch entsprechende Temperierung erstarrt und so eine feste Form annimmt.

Beispielsweise gilt dies für Schokoladenpralinen. Hierfür wird eine äussere Schale bzw. äussere Schalen benötigt, in die gegebenenfalls eine Verzehrmasse eingefüllt wird. Durch eine weitere Schale od.dgl. erhält die Praline später eine geschlossene Form.

Hierfür wird erwärmte, fliessfähige Schokolade in eine Form gebracht und durch einen Druckstempel schalenartig ausgestaltet, wobei der Stempel gekühlt ist und beim Formvorgang die Schokoladenmasse zu der Schale erstarrt.

Dies wird in der WO001998052425A1 beschrieben. Zudem ist bei dieser Erfindung noch der temperierte Stempel zu beachten, der bewirkt, dass sich der Stempel gut von der Schokoladenform lösen lässt.

Bei den Erfindungen gibt es aber einen Nachteil. Die Schokolade wird immer in feste Formen gegossen und muss danach wieder aus diesen Formen genommen werden. Das ist unwirtschaftlich und umständlich in der Handhabung. US3529553 beschreibt eine Vorrichtung zum Herstellen von Schokolade mit einer äußeren Schale aus einer fliessfähigen Schokolade, welche in eine Form durch die Gießrohren eingefüllt wird, wobei dass die Form, in welche die fliessfähige Schokolade eingefüllt wird, ein Blister ist.

### Aufgabe

Die Aufgabe der vorliegenden Erfindung ist es nun, wirtschaftlicher und einfacher in der Handhabung zu sein.

### Lösung der Aufgabe

Zur Lösung dieser Aufgabe führt, dass die Form, in welche die fliessfähige Masse eingefüllt wird, ein Blister ist.

Der Blister der vorliegenden Erfindung ist eine Form, die meist aus Kunststoff besteht und die mehrere Kavitäten aufweist. Man könnte sie mit einem Eiswürfelbehälter vergleichen. Das Abfüllen der fliessfähigen Masse, die im bevorzugten Ausführungsbeispiel aus Schokolade besteht, und das Formen der selbigen in dem Blister haben den grossen Vorteil, dass die Schokoladenformen auch in diesem Blister als Halbfertigprodukt verkauft werden können. Das umständliche Umfüllen wird hier einfach ersetzt und bedeutet eine grosse Zeitersparnis.

Damit der Blister auch stabil sitzt und nicht durchhängt oder durchbricht, wenn der bzw. die Stempel eintauchen, wird dieser nochmals in eine Träger-Form gelegt. Er kann dann am Ende der Produktion einfach aus dieser Träger-Form entnommen und verkauft werden. Eine einfache Handhabung ist gewährleistet.

In die fliessfähige Masse in dem Blister wird ein temperierter Stempel, wie ihn die WO001998052425A1 beschreibt, getaucht. Das bewirkt, dass der Stempel sehr leicht und ohne festzukleben wieder aus der fliessfähigen Masse gezogen werden kann.

Weiterhin erstarrt die Verzehrmasse in dem Blister teilweise und bildet mindestens eine Schalenform. Alles geschieht in dem Blister, was noch den weiteren Vorteil der Sauberkeit und Hygiene mit sich bringt.

Die Träger-Form, in welcher der Blister sitzt, weist einen Ansaugstutzen für Luft auf, und weitere quer und längsverlaufende Vakuumkanäle durchkreuzen die Kavitäten der Träger-Form. Hierdurch wird der Blister an die Träger-Form angesaugt, damit er während der Produktion fest sitzt und nicht verrutschen kann. Das hat den grossen Vorteil, dass die Schokoladenformen, die dabei entstehen, eine genaue Form ohne nicht gewünschte Verformungen aufweisen.

Das Vakuum wird auch solange aufrecht erhalten, bis der Stempel wieder aus der Form ausfährt. Das bedeutet, dass der Blister nicht mit dem Stempel nach oben gezogen werden kann, wenn dieser aus dem Blister ausfährt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Ansicht einer erfindungsgemässen Vorrichtung zum Herstellen von Verzehrgütern;
**Figur 2** eine perspektivische Ansicht einer Träger-Form mit eingesetztem Blister;
**Figur 3** einen Querschnitt durch die Träger-Form mit eingesetztem Blister gemäß Figur 2;
**Figur 4** eine vergrößert dargestellte perspektivische Detailansicht der Träger-Form;
**Figur 5** eine perspektivische Ansicht der Träger - Form mit Ansaugstutzen;
**Figur 6** einen Querschnitt der Träger-Form ohne Blister im Bereich eines Vakuumkanals;
**Figur 7** einen Querschnitt der Träger-Form ohne Blister im Bereich des Ansaugstutzen.

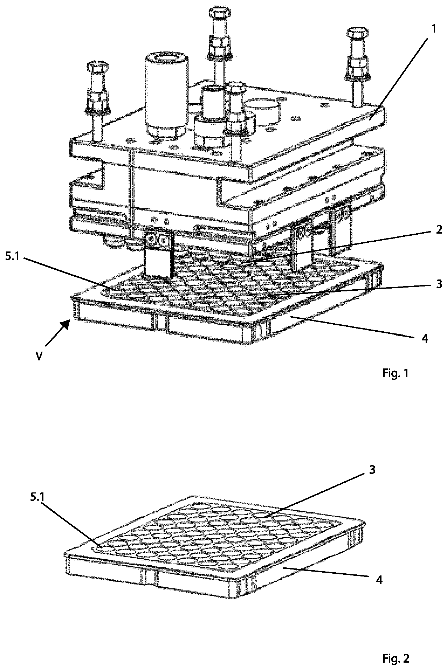

Von einer Vorrichtung V zum Herstellen von Verzehrgütern, insbesondere Schokoladenschalen, sind in Figur 1 ein Kaltpresskopf 1 mit daran befindlichen Stempeln 2, ein Blister 3 und eine Träger-Form 4 gezeigt. Der Kaltpresskopf 1 mit den Stempeln 2 ist aus vorherigen Erfindungen des Anmelders bekannt. Zum Beispiel wird der Stempel 2 in der WO 1998052425 A1 als temperierten Stempel beschrieben. Weiterhin wird dort beansprucht, dass der Taupunkt der das Verzehrgut umgebenden Atmosphäre unter der Temperatur des Stempels gehalten wird, was bewirkt, dass der Stempel 2 an seiner Spitze keine Eiskristalle bildet, was wiederum bewirkt, dass sich keine Wasserflecken an dem Verzehrgut bilden und sich der Stempel leicht aus einer gebildeten Schokoladenschale herauslösen lässt.

Ein weiteres Merkmal des Stempels 2 ist in der WO 2003094626 A1 beschrieben. Er besitzt eine Stempelfläche, an die zu einem Formrand hin eine Schrägfläche anschliesst. Das bewirkt, dass die Masse des überschüssigen Verzehrgutes über den Formrand gedrückt und gleichzeitig auch von der Schalenform getrennt wird, sodass danach mit einem Schaber oder Messer der überschüssige Rand ganz einfach von der Schalenform getrennt werden kann.

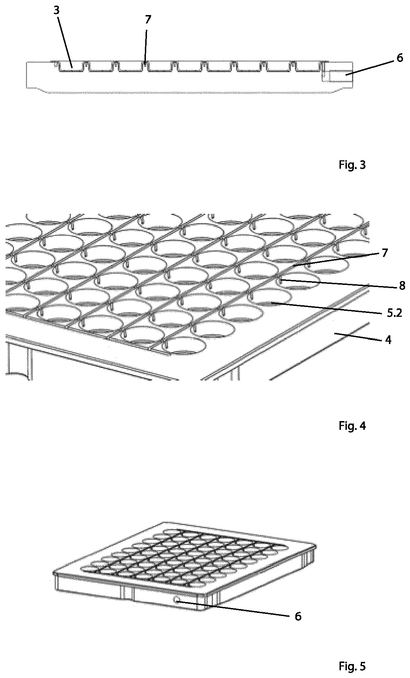

Der Blister 3 bildet gemäss den Figuren 1 und 2 mehrere Kavitäten 5.1 aus, in die das Verzehrgut fliesst. Er ist im bevorzugten Ausführungsbeispiel lösbar mit der Träger-Form 4 verbunden. Auch die Träger-Form 4 weist Kavitäten 5.2 auf, die in Figur 4 deutlich gezeigt werden.

Figur 3 zeigt einen Querschnitt der Träger-Form 4 samt Blister 3. Hier sind längs verlaufenden Vakuumkanäle 7 zu erkennen. Der dazugehörige Ansaugstutzen 6 saugt Luft aus den Vakuumkanälen 7 kurz vor dem Eintauchen der Stempel 2, was bewirkt, dass der Blister 2 in seiner Träger-Form 4 solange festsitzt, bis die Stempel 2 wieder aus dem Blister 2 und den gebildeten Schokoladeschalen gezogen sind.

In Figur 4 wird die Träger-Form 4 ohne Blister 3 gezeigt. Deutlich zu erkennen sind hier nicht nur die längs verlaufenden Vakuumkanäle 7 sondern auch die quer verlaufenden Vakuumkanäle 8, die quer zu den Kavitäten 5.2 der Träger-Form 4 angeordnet sind. Die Luft aus den quer verlaufenden Vakuumkanäle 8 wird ebenfalls über den Ansaugstutzen 6 abgesaugt.

Der Ansaugstutzen 6 und dessen Öffnung sind in Figur 5 nochmals deutlich in einer perspektivischen Ansicht dargestellt.

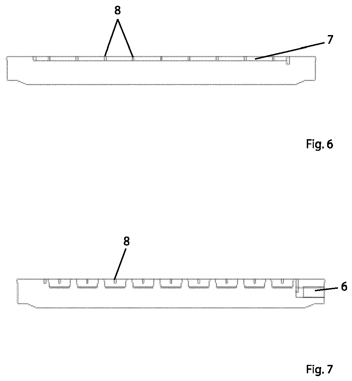

Genauso verdeutlichen Figur 6 und 7 erneut die längs und quer verlaufenden Vakuumkanäle 7 und 8 und deren Position in der Träger-Form 4.

Die Funktionsweise der Erfindung ist Folgende:
Die flüssige Verzehrmasse, zum Beispiel flüssige Schokolade, wird direkt in den Blister 3 gegossen, der in einer ihn stabilisierenden Träger-Form 4 sitzt. Die Träger-Form 4 ist so konstruiert, dass sie einen Ansaugstutzen 6 auf der Hinterseite der Form hat und sowohl quer als auch längs verlaufende VakuumKanäle 7 und 8 zwischen den Kavitäten aufweist. Durch diese Vakuumkanäle 7 und 8 hindurch wird kurz vor dem Eintauchen des Stempels 2 ein Vakuum erzeugt, welches den Blister 3 nach unten zieht. Die Saugwirkung durch das Vakuum bleibt solange bestehen, bis die Stempel 2 nach Erkalten zumindest eines Teils des Verzehrgutes wieder ausfahren.

In dem Blister 3 ist nun das Verzehrgut in mindestens einer Schalenform vorhanden. Eventuell überschüssiges Verzehrgut wird über ein Messer oder einen Schaber vom Rand des Blisters 3 entfernt.

Der Blister 3 kann nun entnommen und einer weiteren Verarbeitung unterzogen oder als Halbfertigprodukt verkauft werden.

**Bezugszeichenliste**

| | | | | | |
|---|---|---|---|---|---|
| 1 | Kaltpresskopf | 34 | | 67 | |
| 2 | Stempel | 35 | | 68 | |
| 3 | Blister | 36 | | 69 | |
| 4 | Träger-Form | 37 | | 70 | |
| 5 | Kavität | 38 | | 71 | |
| 6 | Ansaugstutzen | 39 | | 72 | |
| 7 | Vakuumkanal längs | 40 | | 73 | |
| 8 | Vakuumkanal quer | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Herstellen von Verzehrgütern mit einer äusseren Schale aus einer fliessfähigen Masse, welche in eine Form eingefüllt wird, wobei in die Form ein temperierter Stempel (2) eintaucht und die Masse fliesspresst,
**dadurch gekennzeichnet, dass**
die Form, in welche die fliessfähige Masse eingefüllt wird, ein Blister (3) ist, wobei der Blister (3) durch eine Träger-Form (4) gehalten ist, wobei
die Träger-Form (4) einen Ansaugstutzen (6) für Luft besitzt und längs verlaufende Vakuumkanäle (7) und/oder quer verlaufende Vakuumkanäle (8) zwischen Kavitäten (5) aufweist.

2. Vorrichtung nach Anspruch 1, **dadurch gekennzeichnet, dass** nach dem Einfüllen der fliessfähigen Masse ein temperierter Stempel (2) eintaucht.

3. Vorrichtung nach einem der Ansprüche 1 bis 2, **dadurch gekennzeichnet, dass** durch den temperierten Stempel (2) die Verzehrmasse in dem Blister (3) teilweise erstarrt und mindestens eine Schalenform bildet.

4. Verfahren zum Herstellen von Verzehrgütern mit einer äusseren Schale aus einer fliessfähigen Masse, welche in eine Form eingefüllt wird, wobei in die Form ein temperierter Stempel (2) eintaucht und die Masse fliesspresst, **dadurch gekennzeichnet, dass** die fliessfähige Masse in einen Blister (3) eingefüllt wird, welcher in einer Träger-Form (4) gehalten wird, wobei bevorzugt kurz vor dem Eintauchen des Stempels (2) ein Vakuum zwischen Träger-Form (4) und Blister (3) erzeugt und mindestens solange aufrecht erhalten wird, bis den Stempel (2) wieder ausfährt.

## Claims

1. Device for manufacturing food products having an outer shell made of a flowable mixture, which is filled into a mould, wherein a temperature-controlled die (2) is immersed in the mould and extrudes the mixture,
**characterised in that**
the mould into which the flowable mixture is filled is a blister (3), wherein the blister (3) is held by a carrier mould (4), wherein the carrier mould (4) has an intake duct (6) for air and has longitudinal vacuum channels (7) and/or transverse vacuum channels (8) between cavities (5).

2. Device according to one of the claim 1, **characterised in that** after filling the flowable mixture, a temperature-controlled die (2) is immersed.

3. Device according to one of the claims 1 to 2, **characterised in that** the food mixture partially sets in the blister (3) by means of the temperature-controlled die (2), and forms at least one shell shape.

4. Method for manufacturing food products with an outer shell from a flowable mixture which is filled into a mould, wherein a temperature-controlled die (2) is immersed in the mould and extrudes the mixture, **characterised in that** the flowable mixture is filled into a blister (3), which is held in a carrier mould (4), wherein a vacuum is generated between the carrier form (4) and the blister (3) shortly before the immersion of the die (2) and is held upright at least until the die (2) exits the mould again.

## Revendications

1. Dispositif destiné à la production de produits de consommation avec une coque extérieure constituée d'une masse pouvant être coulée qui est remplie dans un moule, dans lequel un poinçon thermostatisé (2) plonge dans le moule et extrude la masse,
**caractérisé par le fait que**
le moule dans lequel est remplie la masse pouvant être coulée est un blister (3), le blister (3) étant maintenu par un moule de support (4), dans lequel
le moule de support (4) possède une entrée d'aspiration (6) d'air et présente des canaux à vide s'étendant longitudinalement (7) et/ou des canaux à vide s'étendant transversalement (8) entre les cavités (5).

2. Dispositif selon la revendication 1, **caractérisé par le fait qu'**après le remplissage de la masse pouvant être coulée plonge un poinçon thermostatisé (2).

3. Dispositif selon l'une des revendications 1 à 2, **caractérisé par le fait que** par le poinçon thermostatisé (2) la masse de produit de consommation dans le blister (3) se solidifie partiellement et forme au moins une forme de coque.

4. Procédé pour la fabrication de produits de consommation avec une coque extérieure constituée d'une masse pouvant être coulée qui est remplie dans un moule, dans lequel un poinçon thermostatisé (2) plonge dans le moule et extrude la masse, **caractérisé par le fait que** la masse pouvant être coulée est remplie dans un blister (3) qui est maintenu dans un moule de support (4), où de préférence peu avant l'immersion du poinçon (2) un vide est généré entre le moule de support (4) et le blister (3) et est maintenu au moins jusqu'à ce que le poinçon (2) soit à nouveau sorti.
